Europäisches Patentamt

European Patent Office

Office européen des brevets

(19)

(11) Numéro de publication : **0 459 933 A2**

# (12) DEMANDE DE BREVET EUROPEEN

(21) Numéro de dépôt : **91500051.7**

(22) Date de dépôt : **31.05.91**

(51) Int. Cl.⁵ : **B23G 1/04, B23G 1/18, B23Q 1/12**

(30) Priorité : **31.05.90 ES 9001507**

(43) Date de publication de la demande :
**04.12.91 Bulletin 91/49**

(84) Etats contractants désignés :
**AT BE CH DE DK FR GB IT LI NL SE**

(71) Demandeur : **Benito Barragan, Angel**
**Calle Nueva, 6**
**E-20150 Billabona, Guipuzcoa (ES)**

(72) Inventeur : **Rogelio, Hurtado Perea**
**Balmes, 15**
**E-08512 Sant Hipolit de Voltrega (ES)**

(74) Mandataire : **Ferregüela Colon, Eduardo**
**Agricultura, 99**
**E-08019 Barcelona (ES)**

(54) **Machine à tarauder.**

(57)    L'invention se rapporte à une machine du type de celles qui comprennent une poupée (22) montée sur l'extrémité d'un bras articulé supportant un moteur hydraulique (23) et un porte-outils (25) auquel est fixé le taraud (26). Elle est caractérisée en ce que le bras comprend un jeu de tiges (11-16) orthogonales, formant des coordonnées, la première tige pouvant glisser le long d'un support horizontal giratoire (8), alors que la seconde, qui supporte un parallèlogramme articulé (18-20-22-20'), glisse le long de la première. L'un des petits côtés de ce parallèlogramme porte la poupée, sur laquelle agit une excentrique (36) mue par un ressort (29), l'équilibrant et tendant à la placer en position de repos.

EP 0 459 933 A2

**FIG. 1**

Comme l'indique le titre, la présente invention fait référence à une machine à tarauder.

Plus précisément, la présente invention fait référence à une machine du type bien connu de celles qui comprennent une poupée porte-tarauds, actionnée par un moteur hydraulique ou quelques fois pneumatique, monté à l'extrémité d'un bras articulé pouvant pivoter autour, au moins, d'un axe vertical et au moins de deux axes horizontaux, de façon à ce que le taraud puisse être déplacé dans un espace relativement large, et, à l'intérieur de cet espace, manoeuvré aisément dans toutes les positions nécessaires aux fonctions pour lesquelles la machine a été conçue.

Dans les machines de ce type, il convient, évidemment, que la longueur utile du bras supportant le taraud puisse varier au maximum en projection horizontale, de façon à augmenter le plus possible l'ampleur du champ balayé, ce qui se traduit, en définitive, par une augmentation des possibilités d'application de la machine. A cet effet, dans les versions les plus courantes et les plus répandues de ces machines, ledit bras prend la forme d'un compas défini par deux parallélogrammes articulés, à l'un desquels est accouplée la poupée porte-tarauds et les éléments qui permettent de l'actionner, alors que l'autre parallélogramme peut pivoter librement sur un axe vertical fixe, -ou encore, se trouve supporté par un bras pouvant pivoter autour d'un axe vertical fixe-.

Bien qu'assez appréciée, cette version souffre de quelques inconvénients graves. Son inconvénient majeur est le peu de précision que permet le compas lorsqu'il est bloqué à la verticale. Il est en effet difficile de le maintenir dans cette position durant les mouvements d'extension et de pliage correspondant aux opérations de taraudage successives, à cause, précisément, de sa notable longueur totale.

Il se produit donc toujours un minimum de déformations élastiques qu'il est impossible d'éliminer. Les machines de ce type souffrent d'un autre inconvénient grave que l'on peut résumer ainsi: le mouvement compensatoire du bras étant généralement déterminé par des ressorts hélicoïdaux qui tendent constamment à le comprimer, l'opérateur est obligé de développer un effort physique assez important pour situer le taraud en position de travail, surtout lorsque le bras doit travailler dans des positions proches de l'extension maximale.

Il existe sur le marché quelques machines à tarauder de ce type qui ne présentent pas ces défauts, mais il s'agit de machines non portables beaucoup plus lourdes et coûteuses, et qui sont conçues pour couvrir un autre secteur de la demande.

La machine qui fait l'objet de la présente invention permet de résoudre définitivement les inconvénients cités plus haut. Il s'agit, en effet, d'une machine extrêmement simple, capable de concurrencer les modèles les plus simples du marché tant du point de vue du prix, de la légèreté que de la flexibilité, son principal atout vis-à-vis de ses homologues étant sa précision et le peu d'effort exigé par son maniement.

Pour ce faire, conformément à l'invention, la machine est équipée d'un seul bras en forme de parallélogramme articulé, lequel est monté à l'extrémité d'un système mécanique de coordonnées, défini par un bras horizontal qui, pouvant glisser librement et être bloqué dans n'importe quelle position, est lui-même supporté par un bras vertical qui peut également coulisser et se bloquer en toutes positions le long d'un bras horizontal pivotant sur un axe vertical fixe. De cette façon, la machine peut balayer un espace extrêmement large et, lorsque l'on bloque le système de coordonnées sur une position donnée, les déplacements de la poupée entre les positions de travail et d'arrêt ne sont produits que par les mouvements du parallélogramme articulé extrême; la précision est donc pratiquement absolue et les possibilités de déviations latérales quasiment nulles.

D'autre part, toujours conformément à l'invention, les déplacements de la poupée sont contrôlés grâce à un ingénieux système excentrique; ils n'exigent donc que très peu d'efforts.

Les caractéristiques essentielles, le fonctionnement schématique et les avantages principaux de la machine qui fait l'objet de cette invention seront nettement plus clairs à la lumière des dessins ci-joints. L'explication qui suit s'y référera constamment, dans la mesure où, schématiquement et, bien entendu, de façon non exhaustive, on a tenté d'y représenter un exemple concret de réalisation pratique.

Au sujet de ces schémas:

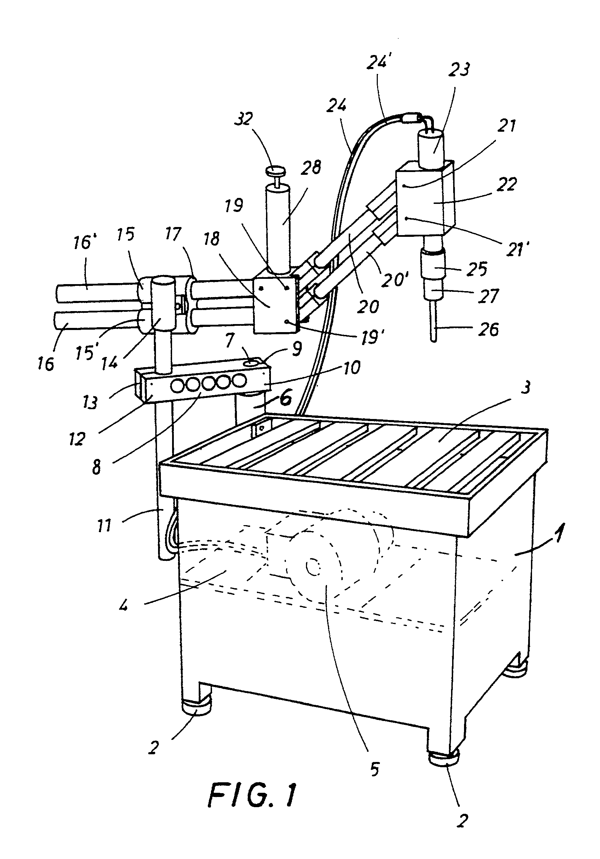

La figure 1 est une vue en perspective de l'ensemble de la machine.

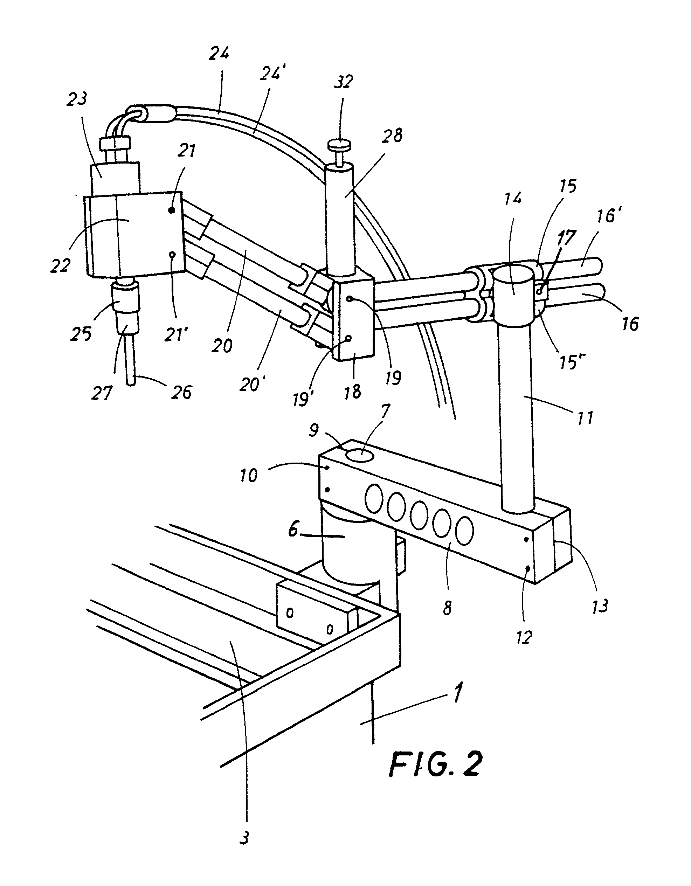

La figure 2 est une vue en perspective, et à plus grande échelle, de la structure du bras qui constitue l'élément essentiel du système.

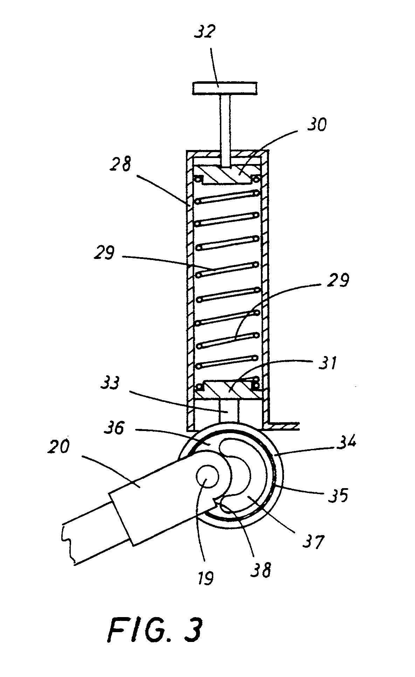

Enfin, la figure 3 est un détail en coupe, à plus grande échelle encore, mais très schématisé, du système excentrique qui permet de contrôler les mouvements de la poupée porte-tarauds.

Commentaire des schémas:

La machine qui fait l'objet de cette invention peut parfaitement être envisagée comme un ensemble portable qu'on installera indifféremment sur une table ou un banc. Cependant, dans sa version la plus courante, autrement dit celle qui est ici représentée, l'ensemble est déjà monté sur un banc (1) en forme de table, qui peut être doté d'un piétement (2) permettant de stabiliser l'ensemble de façon à ce que la surface supérieure (3) sur laquelle est appuyée la pièce à usiner soit parfaitement à l'horizontale. L'espace intérieur de ce banc est divisé en deux zones par une plateforme horizontale (4) sous laquelle est situé un réservoir d'huile ou de liquide hydraulique de grande contenance; la réfrigération du liquide est donc assurée.

Sur la plateforme (4), se trouve le groupe de pression -symbolisé dans son ensemble par la référence (5)-; il est constitué, évidemment, par une pompe et un électromoteur d'entraînement. Autre caractéristique de l'invention, la pompe est en réalité une pompe à engrenages ou à pignons, ce qui permet de régler de façon extrêmement précise le débit du liquide sous pression envoyé en continu au moteur hydraulique dont on parlera plus loin. Il suffit pour cela de régler la vitesse de rotation de l'électromoteur d'entraînement, réglage que l'on peut effectuer par l'intermédiaire d'un système électronique ou au moyen d'un simple variateur mécanique de vitesse incorporé au groupe de pression. De toutes façons, ce système permet d'utiliser intégralement le débit fourni par la pompe, d'éviter toute circulation de liquide sous pression en circuit fermé, et donc d'éliminer totalement les risques de surchauffe et les déperditions énergétiques qui en découlent.

Le principal élément de la machine, le bras articulé, comprend: premièrement, un manchon vertical (6), fermement assujetti au banc (1). Il supporte un axe ou pivot vertical fixe (7), sur lequel est monté, par l'une de ses extrémités, un bras horizontal (8) pouvant pivoter librement et être immobilisé dans n'importe quelle position. A cet effet, dans l'une des versions de la machine, conformément à une disposition citée précédemment, l'extrémité (9) du bras a été laissée ouverte et forme une espèce de bride qui peut être fermée grâce à des vis transversales (10) afin de bloquer le bras pivotant dans la position désirée.

En son extrémité opposée, le bras horizontal (8) est traversé par une tige ou un axe vertical qui peut pivoter et coulisser librement par rapport audit bras, de même qu'être bloqué sur la position et à la hauteur voulues. Dans l'une des versions, préférable mais non obligatoire, ce blocage a lieu par le biais de vis transversales (12) qui ferment la bride formée par l'extrémité ouverte (13) dudit bras.

A l'extrémité de l'axe vertical (11), se trouve chevillé un noyau en forme de manchon fermé (14) qui reçoit l'extrémité dudit axe, et deux manchons orthogonaux (15-15') qui reçoivent les deux bras horizontaux parallèles (16-16'), lesquels peuvent coulisser librement le long desdits manchons. Grâce à la vis à pression (17), par exemple, ces bras peuvent être immobilisés dans la position voulue, quelle qu'elle soit.

Par leur extrémité, les bras horizontaux parallèles (16-16') sont solidarisés à un noyau (18) auquel les bras parallèles (20-20') sont articulés librement grâce aux axes transversaux (19-19') correspondants. Par leurs extrémités opposées, ces bras parallèles sont eux-mêmes articulés au noyau extrême (22) par l'intermédiaire des axes transversaux (21-21') correspondants. Comme on le verra plus loin, le noyau (22) constitue la poupée de la machine. Entre les noyaux (18) et (22) et les bras (20) et (20'), est défini un parallélogramme articulé qui permet de provoquer manuellement les mouvements de l'outil, tel que l'on l'expliquera plus bas.

Sur le noyau (22), comme on l'a vu, se trouve monté un moteur hydraulique (23) qui, grâce aux tuyaux (24- 24') est alimenté par la pompe à laquelle on a fait allusion auparavant. Cette pompe met en branle le porte-outils (25) sur lequel est fixé le taraud (26), ou, éventuellement, un autre outil rotatif quelconque, qu'on aura de préférence équipé d'un système d'embrayage (27) permettant de limiter le couple de rotation, système bien connu et communément employé.

On voit donc que, quelles que soient la forme et les dimensions des pièces que l'on se propose d'usiner, il faudra régler la position de rotation du bras (8), la hauteur de l'axe vertical (11), et la position de rotation des bras (16-16'), de façon à ce que, lors de la descente, la poupée (23) entre en contact avec le point précis qui doit être usiné sur la pièce, l'opérateur se limitant à provoquer manuellement les mouvements ascendants et descendants de ladite poupée.

Pour faciliter cette opération, et faire en sorte qu'elle exige le minimum d'effort, puisque c'est là une caractéristique importante de l'invention, on a prévu un système de ressort et d'excentrique qui compense en grande partie le poids de l'ensemble de la poupée.

A cet effet, conformément à l'invention, un corps cylindrique vertical (28) a été fixé sur le noyau (18). A l'intérieur de ce corps (28), se trouve un ressort hélicoïdal (29) qui joue, en s'étendant, sur deux pistons (30-31), également régulateurs du cylindre. La position de l'un de ces pistons peut être réglée grâce à une vis axiale (32), accessible de l'extérieur. Cette vis permet de régler la tension du ressort.

Le deuxième piston, quant à lui, est solidaire d'un bras axial (33) qui dépasse radialement d'un collier (34), lequel enveloppe un disque ou rouleau (36) monté excentriquement sur l'axe (19) qui constitue l'axe de rotation du bras (20). Entre le collier (34) et le disque (36), est interposé un roulement à aiguilles (35), ou un autre élément équivalent, qui permet d'assurer la liberté de rotation. Enfin, l'excentrique (36) est solidaire d'un bourrelet latéral (37) qui joue contre un talon ou échelon (38) situé à l'extrémité de la tige et détermine le mouvement basculant de cette dernière. Par l'intermédiaire du collier (34), le mouvement d'extension du ressort (29) est transmit à l'excentrique (36), lequel, par le biais du bourrelet (37), joue sur le bras (20), et tend constamment à le situer en l'air, c'est à dire en position de repos.

On voit donc que l'effort de rotation que le poids de la poupée (22) exerce sur le bras (20), en l'obligeant à basculer en bas, n'est pas constant, mais dépend de l'angle que le bras décrit à chaque moment par rapport à l'horizontale. Cet effort est maximum lorsque l'angle décrit est de $0_o$, il est nul lorsque l'angle atteint $90_o$, autrement dit, lorsque le bras se trouve en position verticale. On voit donc aussi qu'il est relativement facile de calculer la position de l'excentrique, de façon à ce que son action s'adapte toujours à l'effort indiqué et que les mouvements de la poupée puissent être imprimés en développant un minimum d'effort, doucement et progressivement.

**Revendications**

**1.-** Machine à tarauder, du type comprenant fondamentalement une poupée montée à l'extrémité libre d'un bras articulé pouvant pivoter sur au moins un axe vertical, qui supporte un moteur hydraulique d'entrainement et un porte-outils; caractérisée par un système de coordonnées comprenant une colonne verticale pouvant être bloquée à la hauteur voulue par rapport à un support horizontal inférieur qui peut pivoter sur un axe vertical fixé au banc de la machine, et deux tiges horizontales égales et parallèles pouvant coulisser par rapport à un noyau solidarisé à l'extrémité supérieure de la colonne en question, tiges qui peuvent en outre être bloquées dans la position voulue, étant fixé à l'une des extrémités des bras en question un support qui constitue le petit côté d'un parallélogramme articulé dont les grands côtés sont définis par deux tiges égales et parallèles, articulées audit support par une extrémité, l'autre extrémité étant reliée à la poupée.

**2.-** Machine, suivant la revendication précédente, caractérisée en ce que, sur le support solidaire des bras horizontaux coulissants, est monté un corps cylindrique à axe vertical qui contient un ressort hélicoïdal à tension réglable, jouant ce dernier, par l'intermédiaire d'un excentrique, sur le parallélogramme articulé, équilibrant le poids de la poupée et tendent constamment à situer ledit parallélogramme en position haute.

**3.-** Machine, suivant la revendication précédente, caractérisée en ce que l'excentrique est enveloppé, par coussinet antifriction interposé, par un collier duquel dépasse une tige qui pénètre dans l'enveloppe cylindrique de l'axe vertical, tige à laquelle est communiquée la force d'extension du ressort hélicoïdal.

**4 -** Machine, suivant la première revendication, caractérisée en ce que le moteur hydraulique est alimenté par le liquide sous pression provenant d'une pompe à engrenages, montée sur une plateforme horizontale prévue à cet effet sur le banc, au dessous du plan de travail, étant reglée la vitesse de rotation de l'outil en même temps que la vitesse de travail de la pompe et, par conséquent, en même temps que le débit que cette dernière fournit.

**5.-** Machine caractérisée en ce que, sous la plateforme horizontale d'assise de la pompe et de l'électromoteur d'entraînement de ladite pompe, est prévu un réservoir de grande capacité, à partir duquel le liquide est aspiré puis envoyé au moteur hydraulique d'entraînement de l'outil.

FIG. 1

FIG. 2

FIG. 3